# EUROPEAN PATENT SPECIFICATION

(11) **EP 0 740 900 B1**
(45) Date of publication and mention of the grant of the patent: **24.09.1997**
(21) Application number: 96106352.6
(22) Date of filing: 23.04.1996
(51) Int. Cl.: A01K 31/04

(54) **A battery for breeding chickens**
Batteriekäfig für Geflügel
Batterie de cages pour volaille

(30) Priority: 03.05.1995 IT MI950886; 06.12.1995 IT MI952576
(43) Date of publication of application: 06.11.1996
(73) Proprietor: TECNO IMPIANTI AVICOLI S.r.l., 35010 Marsango di Campo San Martino (Padova) (IT)
(72) Inventor: Lago, Leopoldo, 35013 Cittadella, Padova (IT)
(74) Representative: Petruzzelli, Antonio European Patent Attorney

(56) References cited:
- EP-A- 0 108 230
- DE-B- 1 217 692
- DE-C- 4 313 456
- GB-A- 652 468
- GB-A- 737 672
- NL-A- 9 002 250
- US-A- 3 978 819
- US-A- 4 242 809

## Description

The present invention relates to the field of plants for breeding chickens or other livestock animals. More particularly it relates to a battery for breeding chickens or other animals, according to the introduction of claim 1, comprising essentially a support framework, a plurality of cages for holding the chickens ordered in rows of cages and a plurality of said rows of cages ordered in height substantially one on top of the other, wherein below each row of cages a respective conveyor belt is provided for removing the fresh droppings produced by the chickens.

Such a battery cage system is known from US-A-3978819.

It is fully known that poultry plants, although the same thing may be said for other animals which are likewise raised in cages, produce, in addition to meat or eggs, also droppings, i.e. a by-product consisting of the excrement of the animals, which can also be put to industrial uses, for example as manure for fertilising agricultural land or as an ingredient of fodder for feeding other animal species.

It is now known that droppings are produced by the animals with a moisture content which is definitely high, and in order to be able handle them and use them adequately, they must be brought to an optimal degree of moisture, i.e. they have to lose most of their water content right at the exit of the poultry plant.

Currently in poultry plants the droppings are collected by conveyor belts arranged below the rows of cages containing the animals and transported outside of the building containing the batteries with the animals, where they are stored until the time in which, following natural loss of moisture, they have reached the required moisture content and can therefore be sold or reused.

In actual fact a certain loss of moisture of the droppings already takes place on the conveyor belts of the structure holding the cages, inside the building which houses the poultry plant. These belts are in fact usually actuated for removal of the droppings deposited thereon once a day, or every two or three days, and therefore, thanks to the high temperature inside the building, around 22 degrees, the droppings lose part of the moisture they contain. However this fraction of moisture lost is not large due to the fact that subsequent layers of droppings are deposited on top of each other, forming a heap in which the underlying layers, which are isolated from the environment by the presence of upper layers of droppings deposited subsequently, do not lose further moisture in addition to that lost immediately after depositing, before being covered by the droppings produced subsequently. On the contrary, the opposite phenomenon of rehumidification of the layers of underlying droppings occurs. In fact the underlying droppings already deposited, which are dried slightly when in contact with the air of the environment inside the building, when they are covered by the new droppings just produced, which are in a condition of definitely high moisture, tend to absorb part of the moisture of the latter, thus eliminating the slight drying effect which had occurred previously.

As a result, due to this continuous supply of fresh droppings on droppings already deposited, drying of the droppings on conveyor belts below the cages of the animals of traditional poultry plants is very low.

Such a way of drying or desiccating droppings is therefore extremely disadvantageous, particularly in the winter when the low temperature of the external environment makes the times for drying the droppings extremely long and thus considerable areas are required for the storage of moist droppings to be dried, with problems of a hygienic nature inherent in the unpleasant odours produced.

A poultry plant is likewise known wherein on a same support structure two rows of paired cages are provided at different heights, and wherein between the rows of adjacent cages a narrow channel or corridor is provided, closed at the side or above, which houses a plurality of narrow blades, longitudinally distanced and tilting in a vertical plane. The blades are used to ventilate the droppings arranged on the conveyor belt below in order to achieve a certain loss of moisture of the droppings themselves, when they are still placed on the belts of the cage support framework.

However this type of known ventilation device has a whole series of disadvantages; these include the fact that the corridor for housing the blades has a width of approximately 10 cm which increases the overall width of the batteries which hold the rows of paired cages, reducing inside the building the space between adjacent batteries available for staff transit.

Moreover, due to the fact that for each pair of rows of paired cages a ventilation section is provided, comprising several tilting blades and that in each poultry plant several ventilation sections of the type described above have to be provided, it is easy to understand how, given the number of ventilation components used which require considerable assembly work, the cost of building such plants is definitely high. The high number of ventilation sections also requires, for actuating the ventilation blades, the use of a high quantity of driving power which involves high running costs of the plant.

The presence of these corridors for housing the blades between rows of adjacent cages also reduces the circulation of air, which makes breathing of the animals more difficult, causing an increase in the percentage of dead animals. These corridors for the blades reduce also the visibility of the inside of the cages by staff, making operations of inspections of the same more difficult and longer.

Moreover the movement of said ventilation blades produces vibrations in the structure of the battery and noise which disturb the animals and may lead to a drop in production yields, for example to a drop in egg production if the farm deals with laying hens.

Furthermore, here too the ventilation effect is partly eliminated by the deposit of fresh droppings on the droppings deposited previously, with the result that only the more external layer of droppings has a certain degree of dehumidification.

It should also be noted that, since said blades are somewhat narrow, less than 10 cm in width, they only move a small quantity of air and furthermore the small flow of air produced by them only involves a central portion of the belt below, with the disadvantage that the droppings deposited in the more lateral zones of said belt do not benefit virtually from any ventilation, and such a system for drying droppings directly on the battery of the cages is not very effective.

The object of the present invention is that of providing a battery for breeding chickens or other livestock animals which avoids the disadvantages shown by traditional batteries.

The object of the present invention is more particularly that of providing a battery for breeding chickens or other animals in cages in which, already at the exit of the droppings from said battery, said droppings have a predefined and required level of moisture, in line with the uses for which the droppings themselves are intended.

Another object of the present invention is that of providing a system for drying chicken droppings which requires a low consumption of drying energy.

A further object of the present invention is that of providing a cage support battery having a configuration such as to allow an improved recirculation of air inside the building which houses the poultry plant to be obtained and which is also such that it facilitates work by staff.

Another object of the present invention is that of providing a battery for livestock animals which allows satisfactory production levels to be maintained.

The previous objects are achieved by providing a battery for breeding chickens or other livestock animals housed inside a room of a building for breeding and comprising a support framework, a plurality of cages for containing the chickens ordered in rows of cages and a plurality of said rows of cages ordered in height substantially one on top of the other, wherein below each row of cages a respective conveyor belt is provided for support and periodical removal of the fresh droppings produced by the chickens; characterised in that said battery further comprises at least one section for storing and drying of the droppings supported by said framework of the battery in a position such as not to receive any direct supply of fresh droppings produced by the chickens.

The droppings remaining deposited for a predetermined length of time on the storage section of the battery, with the battery situated inside a room where the temperature, in order to obtain high production yields from the animals, is always maintained constant in any season, which incidentally, in the case of winter, is definitely higher than the temperature of the outside environment, allows said temperature inside the building housing the breeding plant to be used also for drying the droppings. Satisfactory drying is achieved due to the fact that the droppings being dried, which are on the storage unit, do not receive any supply of newly produced fresh droppings which would lead to all those disadvantages mentioned previously.

In order to achieve acceleration of the drying times it can also be foreseen, according to the present invention, to provide in said section for drying droppings means for ventilation of the droppings using air inside the building housing the battery.

The fact of providing means of ventilation of the droppings directly and solely on the drying section of the type referred above, allows above all, in relation to what was performed previously where each level and each belt for the fresh droppings was fitted with a corresponding row of blades and ventilation parts, a saving in the number of components used and in the mechanical operations of assembly performed, in other words achieving lower building costs. It also allows a saving in driving power, in that for the present invention only one ventilation section has to be actuated, entailing lower running costs of the plant. It also allows the channel housing the ventilation parts, situated between paired cages, to be eliminated with the subsequent advantage of an improved circulation of the air, an improved view of the cages by the staff in charge and small width extension of the cages.

By combining all the beneficial effects of drying provided by a section for depositing of droppings, placed on the battery in contact with the warm air of the plant and which does not receive any supply of fresh droppings, with those deriving from ventilation of the same warm air on the droppings, optimal drying results are obtained.

The present invention will in any case be made clearer on reading the following description, relating to preferred embodiments of the invention, to be read with reference to the accompanying drawings, in which:
Figure 1 is a schematic side view of a battery for breeding chickens comprising the drying section of the present invention;
Figure 2 is a lateral sectioned view of a detail of the drying section of the present invention;
Figure 3 is a transverse sectioned view of the drying section for droppings showing in particular a ventilation blade of said section;
Figure 4 is a front view relating to an Archimedean screw for the transverse distribution of the droppings according to a further feature of the present invention;
Figure 5 is a lateral view of the battery of the present invention with a second preferred embodiment of the ventilation apparatus mounted thereon;
Figure 6 is a view from above of the second preferred embodiment of the ventilation apparatus;
Figure 7 is a transverse view of the second preferred embodiment of the ventilation apparatus of the present invention showing more particularly the actuation block of the blade-holder shafts;
Figure 8 is a view from above of the actuation section of the ventilation apparatus of the second preferred embodiment;
Figure 9 is a front view of a ventilation blade of the present invention;
Figure 10 is a transverse sectioned view of a ventilation blade of the present invention;
Figure 11 is a lateral view of the support block of the blade-holder shaft of the second embodiment of the present invention;
Figure 12 is a sectioned view, taken along line 12-12 of previous Figure 11, of the support block of the blade-holder shaft of the second embodiment of the present invention;
Figure 13 is a transverse view of the second preferred embodiment of the present invention, showing in particular the actions which the blades of the ventilation apparatus discharge onto the support structure of the battery.

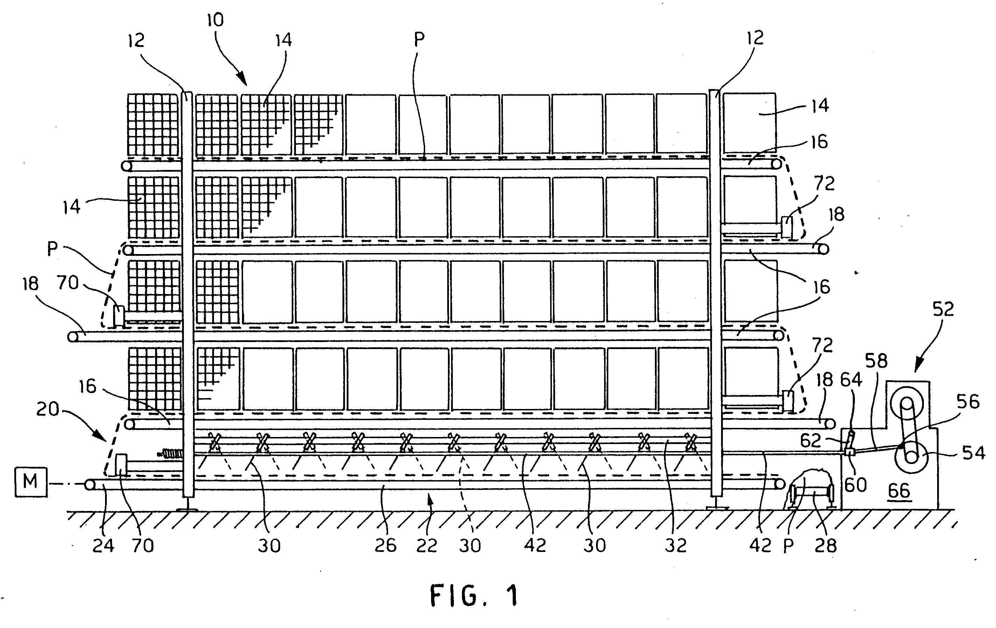

Figure 1 shows a battery 10 for breeding chickens, in particular for breeding laying hens, which is housed inside a building for breeding in which the temperature is maintained at a virtually constant level throughout the year, in order to obtain the best yields in terms of production of eggs.

The battery 10 comprises a support framework 12, a plurality of cages 14 for containing chickens and ordered in rows of cages and a plurality of said rows of cages ordered in height substantially one on top of the other, wherein below each row of cages a respective conveyor belt 16 is provided whereon the droppings fall, denoted as a whole by the reference letter P, newly produced by the chickens and in a condition of high moisture, and which we have named in the present text with the term "fresh droppings" to distinguish them from droppings in a dried condition leaving the drying section described hereinbelow. Each conveyor belt 16 is periodically actuated, for example once a day, to discharge from the belt the droppings which had been deposited on it.

In the battery embodiment for breeding chickens shown here, each belt 16, with the exception of the upper one, has a portion 18 projecting from the framework and suitable for receiving through gravity the droppings transferred by the upper belt. In this way the droppings produced by the chickens before reaching the drying section follow a whole route on various belts 16 which allows them to achieve a certain degree of drying. Such an arrangement for said belts 16 for the fresh droppings is wholly traditional. Obviously the present invention can also be applied in batteries wherein the route of the droppings is totally different from that shown in Figure 1.

According to the present invention a special section 20 is provided for drying the droppings, supported by said framework 12 of the battery.

In the preferred embodiment shown here of the present invention, said section 20 for drying the droppings comprises a unit for storing the droppings placed downstream of said conveyor belts for the fresh droppings 16, in the form of a conveyor belt 22 for depositing of droppings, having an end zone 24 for receiving the droppings and a zone for storing the droppings 26.

Said belt 22 is actuated by a suitable motor M for driving rotation of the latter to discharge the dried droppings from said storage belt 22 towards further transport or container units, denoted here by reference numeral 28, and to move the droppings from the zone for receiving them 24 to the storage zone 26.

As is clear in Figure 1, said section 20 for drying the droppings does not receive any supply of fresh droppings newly produced by the chickens. For this purpose, in the preferred embodiment shown here, said storage unit 20 for the droppings of said drying section is positioned below a conveyor belt for fresh droppings 16, the latter defining in this way an element for covering and protecting from the supply of fresh droppings. Obviously any other arrangement such as to prevent a direct supply of fresh droppings to the drying section can be foreseen for the present invention.

It can also be foreseen for the present invention to provide a breeding battery using a number higher than one of drying sections wherein each drying section serves a plurality of rows of cages.

As shown, said end zone for receiving the droppings 24 extends beyond said lower belt 16 covering the droppings drying section in order to receive the droppings which fall from the lower belt for the fresh droppings 16.

According to a further innovative feature of the present invention said section for drying of the droppings 20 is provided with suitable means for ventilation of the droppings using the air inside the building housing the battery.

In the preferred embodiment shown here said means for ventilation of the droppings comprise a plurality of blades 30 longitudinally aligned above the unit for storage of the droppings to be dried. In Figure 1 said blades 30 are shown also by a dotted line in order to give an example of the reciprocating movement they perform.

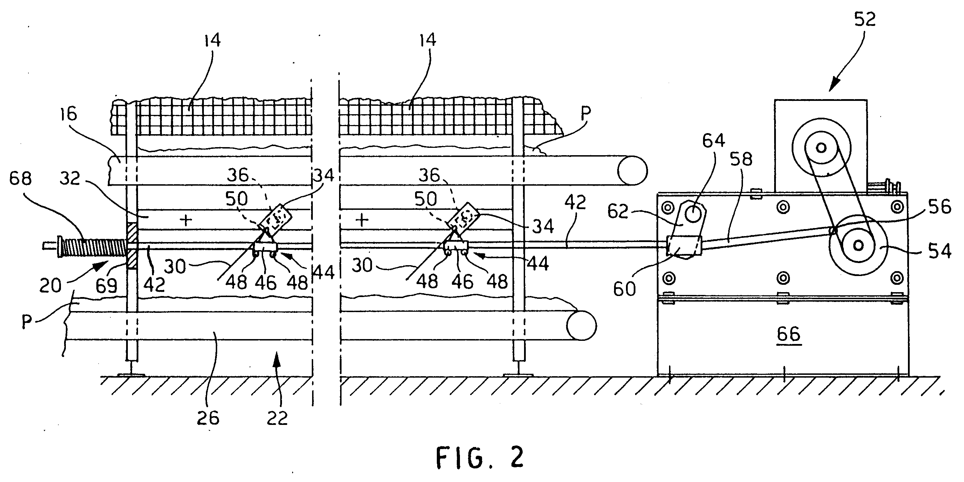

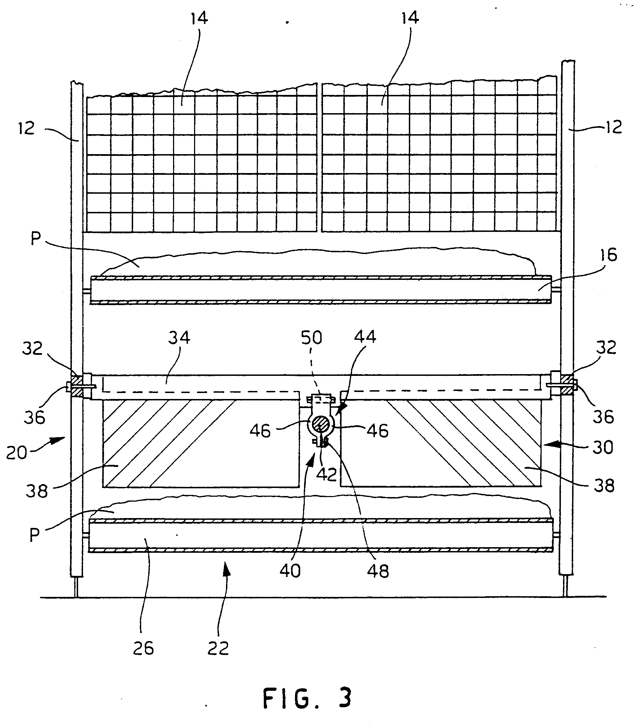

With reference also to Figures 2 and 3, it can be seen that each blade 30 is attached to the support framework, in particular to longitudinal rods 32 thereof, so as to rotate freely around an axis transverse to the longitudinal axis of said storage unit and is moved by suitable means of driving said blades according to a reciprocal, back and forth motion whereby air is sent, at the temperature of the environment inside the building housing the battery, onto the droppings being dried.

As shown particularly in Figure 3, said wide blade 30 has a transverse bar 34, connected rotatably to said rods 32 by means of pins 36, and a first and second air movement panel 38 arranged coplanarly and adjacent one to the other and which are engaged by one of their upper ends in a special transverse slot of the bar 34. Said panels are separated one from the other by a narrow central opening 40.

The means of driving the blades 30 comprise a long longitudinal rod 42 which extends in the central opening 40 for separation of said panels 38 of said blades 30.

The blades 30 are attached to the rod 42 by means of a cylindrical block 44 having two opposite slopes 46 which enclose the rod 42 inside and which are brought close one to the other, blocking the rod 42, by means of suitable screws 48.

Said cylindrical block 44 is in turn attached rotatably to the transverse support bar 34 by means of a pin 50.

The reciprocal backward and forward driving of said rod 42 is actuated by means of a suitable motor part 52 wherein a wheel 54, duly actuated to rotate, holds a crank pin 56 by one end of a connecting rod 58, whose other end is attached to an attachment element 60 which at the other end holds the end of said rod 42 and which is suspended by an arm 62 hinged in 64 to the frame 66 of the motor part.

The rod 42 at the opposite end to that of driving is attached to the framework of said battery by means of a return spring 68 which pushes against a transverse rod 69 of the framework.

Overall said air movement blade 30 has a width almost equal to the width of the belt for storing droppings 22 of the drying section 20. This allows it to move considerable quantities of air and to achieve considerable drying yields without requiring reciprocating motion of high frequency, with the advantage of not generating excessively irritating noise nor excessive vibrations to the support structure, which leaves the animals virtually undisturbed and does not cause reductions in the production of eggs.

As shown in Figure 1 it can be seen how, according to a further feature of the present invention, suitable means 70 are provided for distributing the droppings in a transverse direction, i.e. along the width of the belt, between said receiving zone 24 and said zone for storing the droppings 26 of said belt 22.

Moreover, by placing means 72 for distributing the droppings in a transverse direction at the entrance to each belt for the fresh droppings 16, the advantage of better drying of the droppings is achieved.

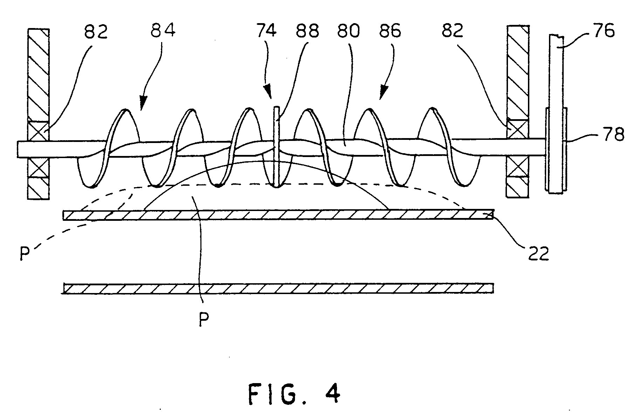

As shown in Figure 4, said means 70 for the distribution of the droppings along the width of the belt comprise Archimedean screw means 74 actuated to rotate by suitable means for driving rotation consisting of a belt 76 and a pulley 78 which is integral with a central shaft 80 of the Archimedean screw supported by means of bearings 82 by the framework of the battery.

Wound on said support shaft 80 are a first and second propeller for conveying the droppings 84, 86, each of which extends from a central disk-like element 88 towards the corresponding lateral edge of the unit. Said propellers 84, 86 are wound spirally in opposite directions so that, following driving of said Archimedean screw to rotate, the droppings are spread from the centre towards the external edges of the belt.

The Archimedean screw system described here is positioned above the belt 22 at an appropriate height and allows the droppings to be levelled, for example as shown by a dotted line in said Figure 4 in which the unbroken line shows the droppings upstream of the Archimedean screw part before being levelled. Thus any risk of heaping of the droppings on the centre is avoided, increasing the surface of this pile which is in direct contact with the air, thus obtaining a better drying yield.

According to the present embodiment a same Archimedean screw configuration is also foreseen for said distribution means 72 for the belts for the fresh droppings 16.

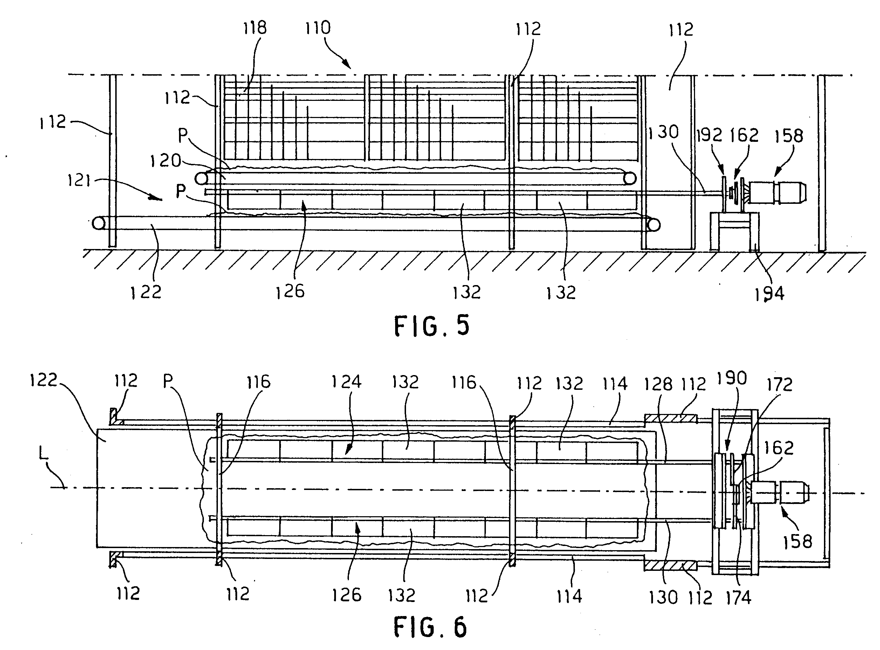

Figures 5 and 6 show a second version of the battery of present invention mounting a second embodiment of the apparatus for ventilation of chicken droppings.

The battery 110 for laying hens of this second embodiment comprises a support structure composed substantially of two parallel rows of uprights 112 connected by longitudinal members 114 and cross members 116. Said structure supports several tiers of cages arranged on two rows, with each tier which has a respective underlying conveyor belt for collecting the chicken droppings. The figures show only the lower tier of cages 118 and the relevant belt 120 for collecting droppings in turn denoted in the figures by reference letter P. Numeric reference 121 in figure 5 overally indicates the section for storing and drying droppings of the presente invention.

The second preferred embodiment shown here of the apparatus for ventilation of chicken droppings comprises, as shown in Figures 5 to 7, a plane or surface for supporting and holding the droppings, in the form of a conveyor belt 122, having a longitudinal axis L (drawn by dashes and dots) and a first and a second ventilation blade 124, 126 arranged transversely distanced one from the other, positioned above said plane or surface for holding the droppings 122 and controlled by suitable means of actuating said ventilation blades suitable for moving, as will be made clearer hereinbelow, said blades 124, 126 reciprocatingly to send air onto said droppings.

According to this second preferred embodiment said ventilation blades 124, 126 are arranged parallel to said longitudinal axis L of said plane or holding surface 122 and are moved synchronously in opposite directions.

The fact that said ventilation blades 124, 126 are arranged parallel to said longitudinal axis of said holding surface, instead of transversely and distanced longitudinally, as occurred in the first embodiment here showed, allows an even ventilation action to be performed on the droppings along the whole length of the blade.

Even drying is thus obtained of all the droppings placed on the holding surface.

This also allows said blades 124, 126 to be moved at a lower speed, so that noise and excessive vibrations of the battery are not generated.

Said vibrations and possible oscillations of the support structure are also prevented thanks to the fact that said ventilation blades 124, 126 are moved in an opposite manner one to the other, so that the actions which a blade imparts to the support structure are compensated by the actions which are imparted to said structure by the other blade.

The fact of using only two ventilation blades, instead of the high number of blades used by the first embodiment, also allows this second embodiment to lower the cost of building and assembling the battery. Moreover, as shown clearly in Figures 5 and 6, said ventilation blades 124, 126 extend in width for the whole length of said plane or holding surface 122. Said width of the blades 124, 126 allows the latter to move a considerable quantity of air, so that they may be advantageously produced somewhat short, that is to say low in height, without causing any lowering in the drying efficiency of the present system compared to those of the prior art. In this way with the present invention the advantage is obtained of being able to configure the ventilation section with a particularly low height, which allows the total height of the battery to be limited or, if required, to arrange a higher number of tiers of cages.

Obviously, according to the present invention, the fact that said blades extend for the whole length of the holding surface is irrelevant, it being sufficient for achieving the objectives set that said ventilation blades extend in width for a section of said plane or surface for holding the droppings.

As shown in the figures, said first and second ventilation blade 124, 126 are supported by respective first and second support shafts 128, 130, attached in turn to the longitudinally distanced transverse members 116 of said support structure by means of suitable attachment parts 137 which allow said blade-holder shafts 128,130 to rotate freely in planes at right angles to the axis of the surface for holding the droppings.

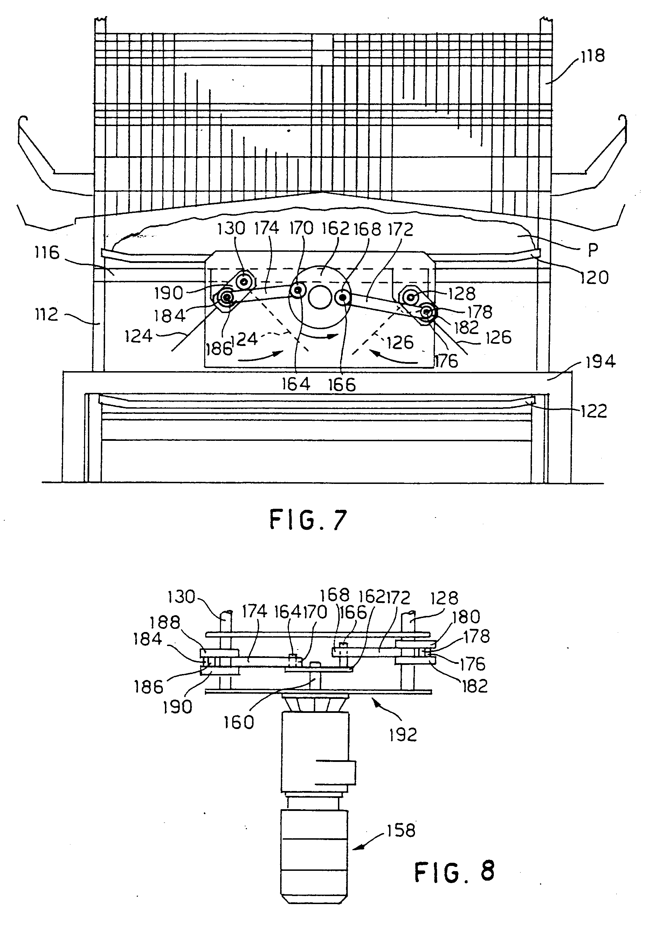

As shown particularly in Figures 7 and 8, said means of actuating said shafts 128, 130 comprise a drive motor 158 and a relative drive shaft 160 whereto a flange 162 is attached, having two eccentric pins 164, 166 coaxial to said shafts 128, 130 and attached to said flange 162 at opposite edges of the latter, so that between them there is an angular distance of 180°. Rotatably connected to each of said eccentric pins 164 and 166 are the ends 168, 170 of respective connecting rods 172, 174 which extend on opposite sides and are used respectively for actuating rotation of the blade-holder shaft 128 and of the blade-holder shaft 130.

The connecting rod 172 has its other end 176 connected rotatably to a crankpin 178 placed between two substantially rectangular plates 180, 182 defining a crank element. Said crankpin 178 is attached internally to said plates 180, 182 at one of their rotating ends. The other end of the two crank plates 180, 182 is attached to the blade-holder shaft 128 defining the fulcrum of rotation of the crank.

The connecting rod 174, like the connecting rod 172, has its other end 184 connected rotatably to a respective crankpin 186 placed between two respective and substantially rectangular plates 188, 190 defining a second crank element. Said crankpin 186 is attached internally to said plates 188, 190 at one of their ends. The other end of the two crank plates 188, 190 is attached to the blade-holder shaft 130 defining the fulcrum of rotation of the second crank. As shown, the two pins 164 and 166 have different lengths to allow the two connecting rods 172, 174 to be longitudinally distanced one from the other and to be able to move on two vertical and transverse planes parallel one to the other without hindrances.

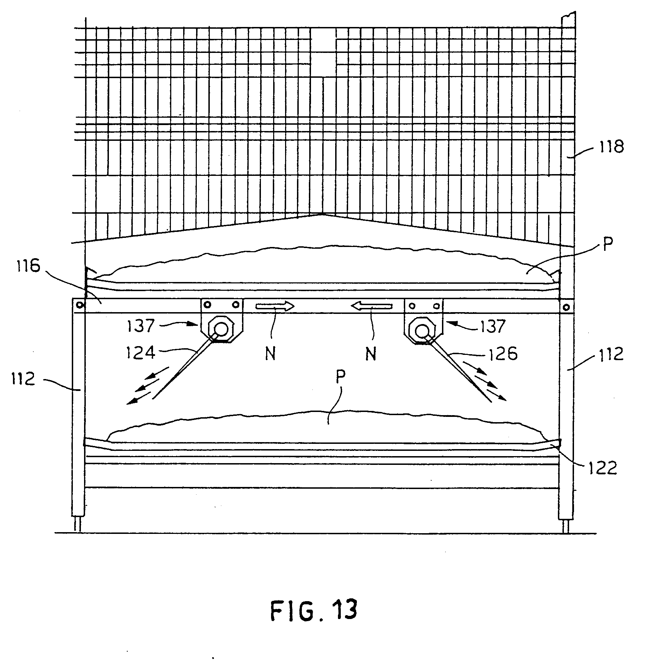

As indicated, in the second preferred embodiment described here, said primary drive shaft 160 is actuated to rotate to cause a reciprocating and synchronous rotating movement in opposite angular directions of said blades 124, 126. This is made fully clear in Figure 7 where dotted lines indicate said blades in a subsequent working position. As shown in Figure 13, the axial actions N which, through effect of the movement of ventilation of a blade are discharged onto the cross member 116, are compensated and balanced by the axial actions N generated by the movement of ventilation of the other blade. These axial actions which from the blades are discharged onto the structure are therefore reciprocally compensated already on the support cross member and do not generate virtually any force on the remaining part of the structure. Neither vibrations nor oscillations of the support structure are produced and said structure can therefore be dimensioned with elements having definitely small resistant sections with a saving in the construction costs and weight of the structure. Obviously, according to this particular features of present invention, any other type of movement of the blades, such that the actions on the structure generated by the movement of a blade are counterbalanced by the actions due to the movement of another blade, comes under the concept claimed here.

The assembly for driving opposite rotation of the blade-holder shafts, as shown in the figures, is contained in a housing and protection box 192 attached directly to a stand 194 of the support structure. Said box 192 supports freely rotatably said shafts 128, 130 and outside thereof said drive motor 158 is attached to project.

As shown, each ventilation blade consists of a plurality of panels 132 longitudinally aligned and coplanar one with the other and attached by suitable attachment means to the respective blade-holder shaft.

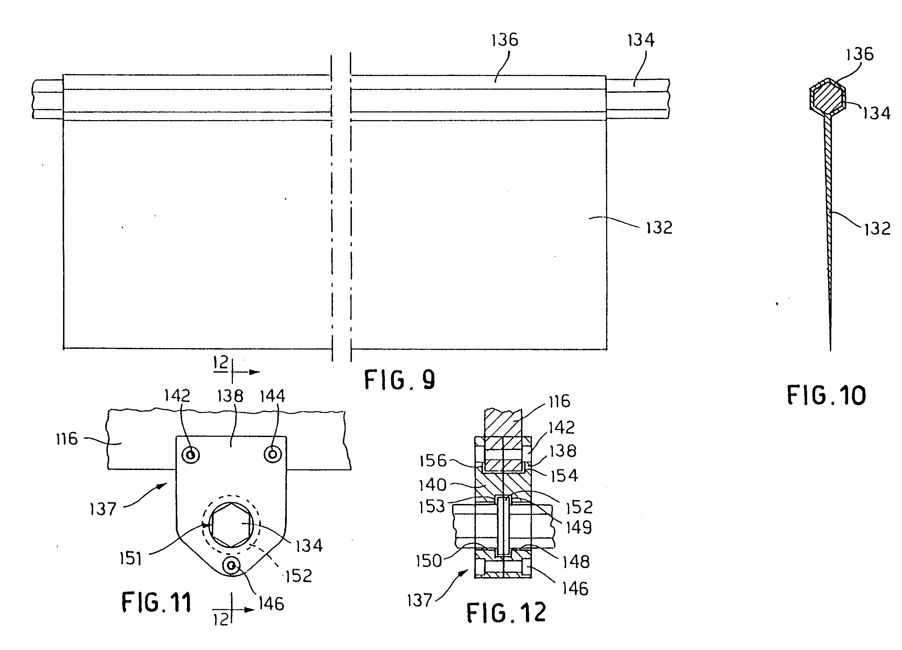

As shown especially in Figures 9 and 10, according to a further advantageous feature of the present invention, each support shaft 128, 130 has an external profile 134 with a polygonal shape, while said panels 132 have a coupling portion in the form of a hollow tubular element 136 having a polygonal configuration whose internal part matches the external profile 134 of the corresponding support shaft, so that said hollow tubular element 136 can be inserted on the corresponding shaft and remain firmly anchored to the latter.

This is therefore an extremely advantageous configuration, in that it allows extremely rapid assembly of the panels on the support shaft. It is in fact sufficient to insert the tubular element 136 onto the respective shaft. Said blade is also extremely advantageous from the economic point of view in that each individual panel of the blade can be manufactured in a plastic material by cutting a long part obtained by means of a considerably economical extrusion operation. In order to obtain these ventilation blades costly operations of moulding a plastic material are thus avoided.

As shown in Figures 11 and 12, each of said parts 137 for attaching rotatably said support shafts 128, 130 of the blades to said cross members 116 comprises a first and a second platelet 138, 140 held matchingly by means of screws 142, 144, 146 which have, at their lower triangular part, respective circular through holes 148, 150 defining a passage hole for the profile of the shaft 134. Said holes 148 and 150 have respective matching widenings 149, 153 defining a housing for an annular element 152 for guiding and sliding of the shaft 134 with which it is integral. The platelets 138, 140 have respective facing notches 154, 156 above, defining a seat for housing the lower part of the transverse member profile section 116 whereto they are attached by means of the upper screws 142, 144.

## Claims

1. A battery for breeding chickens or other livestock animals housed inside a room of a building for breeding and comprising a support framework (12; 112, 114, 116), a plurality of cages (14; 118) for containing the chickens ordered in rows of cages (14, 118) and a plurality of said rows of cages (14, 118) ordered in height substantially one on top of the other, wherein below each row of cages (14, 118) a respective conveyor belt (16, 120) is provided for support and periodical removal of the fresh droppings (P) produced by the chickens; in which said battery further comprises at least one section (20;121) for storing and drying of the droppings (P) supported by said framework (12; 112, 114, 116) of the battery in a position such as not to receive any direct supply of fresh droppings (P) produced by the chickens; characterised in that said section (20, 121) for storing and drying the droppings (P) comprises a plane (22, 122) for supporting the droppings (P) placed vertically aligned with the rows of cages (14, 118) and the respective conveyor belts (16, 120), and blade ventilating means in the form of oscillating blade means (30; 124, 126) situated above said supporting plane (22; 122) and for ventilating air onto the droppings thereon supported; and in that the section (20, 121) for storing and drying the droppings (P) has an open configuration for allowing said blade ventilating means (30; 124, 126) to provide an air flow exchange between the section (20, 121) for storing and drying and the room which houses the battery (10).

2. A battery for breeding chickens according to claim 1, characterised in that said section (20, 121) for storing and drying comprise a covering element (16, 120) and is laterally open for an airflow exchange between the section (20, 121) for storing and drying and the room which houses the battery (10).

3. A battery for breeding chickens according to claim 2, characterised in that said covering element is constituted by the conveyor belt (16; 120) for fresh droppings (P) of the above row of cages (14, 118).

4. A battery for breeding chickens according to any of previous claims, characterised in that said plane (22; 122) for supporting and storing the droppings elongates longitudinally beyond said above placed conveyor belts (16; 120) for fresh droppings in order to receive droppings from a conveyor belt for fresh dropping arranged upstream along a conveying droppings path.

5. A battery for breeding chickens according to any of previous claims, characterised in that said plane (22; 122) for supporting and storing the droppings is in the form of a conveyor belt, said conveyor belt having means (M) for being periodically driven in rotation for loading the droppings (P) and distributing them along the entire length of the belt (22; 122) and for discharging the dried droppings from said storage belt (22; 122).

6. A battery for breeding chickens according to claim 5, characterised in that the said section (20, 121) for storing and drying is laterally open from the conveyor belt (22, 122) for supporting the droppings (P) of the section for storing and drying to the conveyor belt (16; 120) for fresh droppings (P) of the above row of cages (14, 118).

7. A battery for breeding chickens according to any of previous claims, characterised in that said ventilating blade means comprise a plurality of blades (30), longitudinally aligned along the section for storing the droppings to be dried, each blade (30) being attached to the support framework (12) in a rotating manner, and means (42, 50) for driving said blades (30) in a reciprocating, back and forth, movement suitable for sending air onto the droppings.

8. A battery for breeding chickens according to any of the previous claims 1 to 6, characterised in that said ventilating blade means comprise a first and a second plurality of transverse panels (38,38), in which the panels (38) of each plurality of transverse panels is longitudinally aligned and distanced one in respect to the others, in that the panels (28) of each plurality of panels are attached to the support framework (12) in a rotating manner, and that are provided means (42, 50) for driving said panels (38) of each plurality of panels in a reciprocating, back and forth, movement suitable for sending air onto the droppings.

9. A battery for breeding chickens according to claim 8, characterised in that each of said transverse panels (38) elongates with one of its lateral edges in the proximity of the edge of the supporting plane (22) for an airflow exchange between the section (20) for storing and drying and the room which houses the battery (10).

10. A battery for breeding chickens according to any of the previous claims 8 and 9, characterised in that each panels (38) of a first plurality of transverse panels is coplanarly and adjacent to a corresponding panels (38) of the second plurality of transverse panels, said corresponding panels (38, 38) of the first and second plurality of panels are separated in respect to each other by a narrow central opening (40).

11. A battery for breeding chickens according to claim 10, characterised in that each panels (38) of the first plurality of transverse panels and the corresponding coplanarly and adjacent panel (38) of the second plurality of transverse panels are connected to each other for defining a single wide blade (30).

12. A battery for breeding chickens according to claim 11, characterised in that said wide blade (30) for moving the air has a total width almost equal to the width of the plane (22) for supporting droppings of the storing and drying section (20).

13. A battery for breeding chickens according to claim 11, characterised in that said means of driving the ventilation blades (30) comprise a long longitudinal rod (42) and means (44, 46, 48) of attachment of said blades (30) or panels (38) to said rod (42), as well as means (52) of alternatively driving backwards and forwards said rod (42) for driving the blades (30).

14. A battery for breeding chickens according to claim 13, characterised in that said longitudinal rod (42) extends in the central opening (40) of separation of said panels (38, 38).

15. A battery for breeding chickens according to claim 13, characterised in that of comprising pushing spring means (68) acting on said longitudinal rod (42).

16. A battery for breeding chickens according to claim 11, characterised in that said first and second air movement panel (38, 38) are engaged by one of their upper ends in a transverse slot of the bar (34) connected rotatably to the framework by means of pins (36).

17. A battery for breeding chickens according to any of claims 1 to 6, characterised in that said blade means for the ventilation of said droppings comprises at least a first blade (124 or 126) for ventilation of the droppings (P) arranged longitudinally parallel to the plane (122) for supporting the droppings (P), and means (128, 130, 158) for actuating reciprocatingly said ventilation blade so as to send air onto said droppings (P).

18. A battery for breeding chickens according to any of claims 1 to 6 characterised in that said blade means for the ventilation of said droppings comprises at least a first and a second blade (124, 126) for ventilation of the droppings (P) arranged longitudinally parallel to the plane (122) for supporting the droppings (P), and means (128, 130, 158) for actuating reciprocatingly said ventilation blades so as to send air onto said droppings (P) in such way that said ventilation blades (124, 126) are moved synchronously in opposite directions.

19. A battery for breeding chickens according to claim 17 or 18, characterised in that said ventilation blades (124, 126) extend in width for the entire length of said supporting plane (122) or for a longitudinal portion thereof.

20. A battery for breeding chickens according to claim 18 characterised in that said first and second ventilation blade (124, 126) are arranged transversely distanced one from the other.

21. A battery for breeding chickens according to claim 17 or 18, characterised in that each of said ventilation blades (124, 126) is in the form of a short blade for air movement.

22. A battery for breeding chickens according to claim 17 or 18, characterised in that said first and second ventilation blade (124, 126) are supported by respective first and second support shafts (128, 130) attached in turn freely rotatably to said support structure in planes at right angles to the axis (L) of the plan (122) for supporting the chicken droppings (P).

23. A battery for breeding chickens according to claim 17 or 18, characterised in that each ventilation blade (124, 126) consists of a plurality of panels (132) longitudinally aligned and coplanar one with the other.

24. A battery for breeding chickens according to any of previous claims 22 or 23, characterised in that each support shaft (128, 130) has an external profile (134) with a polygonal shape and in that means for attaching each panel to the corresponding support shaft are provided, said attachment means comprising a coupling portion in the form of a hollow tubular element (136) having an internal configuration with a polygonal shape suitable for matching the external profile (134) of the corresponding support shaft and such as to be inserted on the corresponding shaft and remain firmly anchored to the latter.

25. A battery for breeding chickens according to claim 18, characterised in that said actuation means are means for moving said blades rotatably and reciprocatingly in opposite angular directions.

26. A battery for breeding chickens according to claim 22, characterised in that said support framework has a plurality of longitudinally distanced cross members (116) and means (137) for rotatably attaching said support shafts (128, 130) of the blades to said cross members (116).

27. A battery for breeding chickens according to any of the previous claims, characterised in that it comprises means (70, 72)for distributing the droppings in a transverse direction.

28. A battery for breeding chickens according to claim 27, characterised in that said means (70) for distributing the droppings in a transverse direction are associated with said belt (22) of the storing and drying section (20).

29. A battery for breeding chickens according to claim 27, characterised in that said means (72) for distributing the droppings in a transverse direction are associated with each belt (16) for fresh droppings (P).

30. A battery for breeding chickens according to any of previous claims 27 to 29, characterised in that said means (70, 72)of distributing droppings along the width of the belt comprise Archimedean screw means (74) actuated to rotate by suitable means (76, 78) of driving rotation.

31. A battery for breeding chickens according to claim 30, characterised in that said Archimedean screw means (74) comprise a first and second propeller (84, 86) for conveying the droppings, each of which extends from the centre of the Archimedean screw (74) towards the corresponding lateral edge of the Archimedean screw (74), said propellers (84, 86) being wound spirally in opposite directions so that following driving of said Archimedean screw (74) to rotate, the droppings (P) are spread from the centre towards the external edges of the belt.

## Patentansprüche

1. Eine Batterie für die Zucht von Hühnern oder anderem Viehbestand, der in einem Raum eines Geflügelzuchtgebäudes untergebracht ist und ein Traggestell (12; 112, 114, 116), eine Anzahl von Käfigen (14; 118) für die Aufnahme der Hühner, die in einer Reihe von Käfigen (14, 118) angeordnet sind, sowie eine Anzahl dieser besagten Reihen von Käfigen (14; 118) umfaßt, die höhenmäßig im wesentlichen einer über dem anderen angeordnet sind, wobei unterhalb jeder Käfigreihe (14, 118) ein entsprechendes Förderband (16, 120) für die Aufnahme und periodische Entfernung der frischen Exkremente (P) sorgt, die von den Hühnern erzeugt werden; wobei die besagte Batterie desweiteren zumindest einen Bereich (20, 21) für die Lagerung und Trocknung der Exkremente (P) umfaßt, der durch das besagte Gestell (12; 112, 114, 116) der Batterie in einer Stellung gehalten wird, die so beschaffen ist, daß sie keine direkte Zufuhr frischer, von den Hühnern erzeugter Exkremente (P) erhält, dadurch gekennzeichnet, daß der besagte Bereich (20, 121) für die Lagerung und Trocknung der Exkremente (P) eine Fläche (22, 122) für die Aufnahme der Exkremente (P) umfaßt, die senkrecht mit den Reihen von Käfigen (14, 118) und den entsprechenden Förderbändern (16, 120) ausgerichtet ist, sowie Ventilatorflügel in Form von oszillierenden Flügeln (30; 124, 126), die oberhalb von der besagten Aufnahmefläche (22; 122) angeordnet sind und für die Belüftung der sich darauf befindenden Exkremente sorgen; sowie dadurch, daß der Bereich (20, 121) zum Lagern und Trocknen der Exkremente (P) eine offene Konfiguration aufweist, um diesen besagten flügelförmigen Lüftungselementen (30; 124, 126) zu erlauben, für den Austausch eines Luftstroms zwischen dem Bereich (20, 121) für die Trocknung und Lagerung und dem Raum, in dem die Batterie (10) untergebracht ist, zu sorgen.

2. Eine Batterie für die Zucht von Hühnern laut Anspruch 1, dadurch gekennzeichnet, daß der besagte Bereich (20, 121) für die Lagerung und Trocknung ein Abdeckungselement (16, 120) umfaßt und seitlich zwecks Luftstromaustausch zwischen dem Bereich (20, 121) für die Trocknung und Lagerung und dem Raum, in dem die Batterie (10) untergebracht ist, offen ist.

3. Eine Batterie für die Zucht von Hühnern laut Anspruch 2, dadurch gekennzeichnet, daß das besagte Abdeckungselement durch das Förderband (16; 120) für frische Exkremente (P) der oben erwähnten Käfigreihe (14, 118) gebildet wird.

4. Eine Batterie für die Zucht von Hühnern laut einem beliebigen der bereits erwähnten Ansprüche, dadurch gekennzeichnet, daß die besagte Fläche (22; 122) für die Aufnahme und Lagerung der Exkremente sich längs über das darüber angeordnete Förderband (16; 120) für frische Exkremente hinaus erstreckt, um Exkremente von einem Förderband für frische Exkremente zu erhalten, das stromaufwärts entlang einer Exkrementen-Förderbahn angeordnet ist.

5. Eine Batterie für die Zucht von Hühnern, laut einem beliebigen der bereits erwähnten Ansprüche, dadurch gekennzeichnet, daß die besagte Fläche (22; 122) für die Aufnahme und Lagerung der Exkremente die Form eines Förderbands aufweist, wobei das besagte Förderband Mittel (M) besitzt, um periodisch in Umdrehung gebracht zu werden zu können, damit die Exkremente (P) aufgeladen und über die gesamte Länge des Bands (22; 122) verteilt und die getrockneten Exkremente vom besagten Lagerungsband (22; 122) abgeladen werden können.

6. Eine Batterie für die Zucht von Hühnern lauf Anspruch 5, dadurch gekennzeichnet, daß der besagte Bereich (20, 121) für die Lagerung und Trocknung seitlich offen ist, vom Förderband (22, 121) für die Aufnahme der Exkremente (P) des Bereichs für Lagerung und Trocknung zum Förderband (16; 120) für frische Exkremente (P) der oben erwähnten Reihe von Käfigen (14, 118).

7. Eine Batterie für die Zucht von Hühnern, laut einem beliebigen der bereits erwähnten Ansprüche, dadurch gekennzeichnet, daß die besagten Lüftungsflügel-Elemente eine Anzahl von Flügeln (30) umfassen, die längs entlang dem Bereich für die Lagerung der Exkremente, die getrocknet werden sollen, angeordnet sind, wobei jeder Flügel rotierend (30) am Traggestell (12) befestigt ist und die Mittel (42, 50) für den Antrieb dieser Flügel (30) sich abwechselnd hin- und herbewegen, um für die Belüftung der Exkremente zu sorgen.

8. Eine Batterie für die Zucht von Hühnern, laut einem beliebigen der bereits erwähnten Ansprüche von 1 bis 6, dadurch gekennzeichnet, daß die besagten Lüftungsflügel-Elemente eine erste und eine zweite Reihe von Querplatten (38, 38) aufweisen, wobei die Platten (38) jeder Reihe von Querplatten längs ausgerichtet und jeweils voneinander entfernt sind, sowie dadurch, daß die Platten (28) jeder Reihe von Platten rotierend am Traggestell (12) befestigt sind und daß für Mittel (42, 50) gesorgt wird, die diese Platten (38) jeder Reihe von Platten in einer abwechselnden Hin- und Herbewegung antreiben, um die Belüftung der Exkremente zu garantieren.

9. Eine Batterie für die Zucht von Hühnern, laut Anspruch 8, dadurch gekennzeichnet, daß jede der besagten Querplatten (38) sich mit einer ihrer seitlichen Kanten in die Nähe der Ecke der Tragfläche (22) erstreckt, und zwar zwecks Austausch eines Luftstroms zwischen dem Bereich (20) für die Lagerung und Trocknung und dem Raum, in dem die Batterie (10) untergebracht ist.

10. Eine Batterie für die Zucht von Hühnern, laut einem beliebigen der bereits erwähnten Ansprüche 8 und 9, dadurch gekennzeichnet, daß jede Platte (38) einer ersten Reihe von Querplatten koplanar ist und an eine entsprechende Platte (38) einer zweiten Reihe von Querplatten angrenzt, wobei die besagten Platten (38, 38) der ersten und zweiten Reihe von Platten jeweils durch eine schmale mittlere Öffnung (40) voneinander getrennt sind.

11. Eine Batterie für die Zucht von Hühnern laut Anspruch 10, dadurch gekennzeichnet, daß jede Platte (38) der ersten Reihe von Querplatten und die jeweilige, entsprechende koplanare und angrenzende Platte (38) der zweiten Reihe von Querplatten miteinander verbunden sind, um einen einzelnen, breiten Flügel (30) zu bilden.

12. Eine Batterie für die Zucht von Hühnern laut Anspruch 11, dadurch gekennzeichnet, daß der besagte breite Flügel (30) für die Bewegung der Luft eine Gesamtbreite aufweist, die beinahe der Breite der Fläche (22) für die Aufnahme der Exkremente des Lagerungs- und Trocknungsbereichs (20) gleicht.

13. Eine Batterie für die Zucht von Hühnern laut Anspruch 11, dadurch gekennzeichnet, daß die besagten Antriebsmittel der Lüftungsflügel (30) eine lange, längs verlaufende Stange (42) sowie Mittel (44, 46, 48) für die Befestigung der besagten Flügel (30) oder Platten (38) an die besagte Stange (42) umfassen, sowie Mittel (52) für die abwechselnde Vor- und Rückbewegung der besagten Stange (42) für den Antrieb der Flügel (30).

14. Eine Batterie für die Zucht von Hühnern laut Anspruch 13, dadurch gekennzeichnet, daß die besagte Längsstange (42) sich in die mittlere Öffnung (40) erstreckt, die die Trennung der besagten Platten (38, 38) darstellt.

15. Eine Batterie für die Zucht von Hühnern laut Anspruch 13, dadurch gekennzeichnet, daß sie Druckfedern (68) umfaßt, die auf die besagte Längsstange (42) einwirken.

16. Eine Batterie für die Zucht von Hühnern laut Anspruch 11, dadurch gekennzeichnet, daß die besagte erste und zweite Luftbewegungs-Platte (38, 38) mit einem ihrer oberen Enden in einen Querschlitz der Stange (34) eingreift, die drehbar über Stifte (36) mit dem Gestell verbunden ist.

17. Eine Batterie für die Zucht von Hühnern laut einem beliebigen der bereits erwähnten Ansprüche von 1 bis 6, dadurch gekennzeichnet, daß die besagten Flügelelemente für die Lüftung der besagten Exkremente zumindest einen ersten Flügel (124 oder 126) für die Belüftung der Exkremente (P) umfassen, der längs parallel zu der Fläche (122) für die Aufnahme der Exkremente (P) angeordnet ist, sowie Mittel (128, 130, 158) für den abwechselnden Antrieb des besagten Lüftungsflügels, um für die Belüftung der besagten Exkremente (P) zu sorgen.

18. Eine Batterie für die Zucht von Hühnern, laut einem beliebigen der bereits erwähnten Ansprüche von 1 bis 6, dadurch gekennzeichnet, daß die besagten Flügel für die Belüftung der besagten Exkremente zumindest einen ersten und einen zweiten Flügel (124, 126) für die Belüftung der Exkremente (P) umfassen, die längs parallel zu der Fläche (122) für die Aufnahme der Exkremente (P) angeordnet sind, sowie Mittel (128, 130, 158) für den abwechselnden Antrieb der besagten Lüftungsflügel, damit für die Belüftung der Exkremente (P) gesorgt wird, und zwar so, daß die besagten Lüftungsflügel (124, 126) synchron in entgegengesetzten Richtungen bewegt werden.

19. Eine Batterie für die Zucht von Hühnern laut Anspruch 17 oder 18, dadurch gekennzeichnet, daß besagte Lüftungsflügel (124, 126) sich in der Breite entweder über die gesamte Länge oder über eine Längsstrecke der besagten Aufnahmefläche (122) erstrecken.

20. Eine Batterie für die Zucht von Hühnern laut Anspruch 18, dadurch gekennzeichnet, daß der besagte erste und der zweite Lüftungsflügel (124, 126) jeweils quer voneinander entfernt angeordnet sind.

21. Eine Batterie für die Zucht von Hühnern laut Anspruch 17 oder 18, dadurch gekennzeichnet, daß jeder der besagten Lüftungsflügel (124, 126) die Form eines kurzen Luftbewegungs-Flügels aufweist.

22. Eine Batterie für die Zucht von Hühnern laut Anspruch 17 oder 18, dadurch gekennzeichnet, daß die besagten ersten und zweiten Lüftungsflügel (124, 126) durch die jeweiligen ersten und zweiten Tragwellen (128, 130) gehalten werden, die nacheinander frei drehbar mit dem besagten Tragwerk aus Flächen im rechten Winkel zu der Achse (L) der Fläche (122) für die Aufnahme der Hühnerexkremente (P) verbunden sind.

23. Eine Batterie für die Zucht von Hühnern laut Anspruch 17 oder 18, dadurch gekennzeichnet, daß jeder Lüftungsflügel (124, 126) aus einer Anzahl von Platten (132) besteht, die längs ausgerichtet und koplanar zueinander sind.

24. Eine Batterie für die Zucht von Hühnern laut einem beliebigen der bereits erwähnten Ansprüche, 22 oder 23, dadurch gekennzeichnet, daß jede Tragwelle (128, 130) ein Außenprofil (134) mit polygonaler Form aufweist, sowie dadurch, daß Mittel für die Befestigung jeder Platte an der entsprechenden Tragwelle vorgesehen sind, wobei besagte Befestigungsmittel ein Kupplungsteil in Form eines hohlen Rohrelements (136) umfassen, das eine innere Konfiguration mit einer polygonalen Form aufweist, die auf das Außenprofil (134) der entsprechenden Tragwelle paßt, und zwar so, daß es auf die entsprechende Welle gesetzt und fest an der letzteren verankert werden kann.

25. Eine Batterie für die Zucht von Hühnern laut Anspruch 18, dadurch gekennzeichnet, daß die besagten Antriebsmittel für die Bewegung der besagten Flügel Mittel für die abwechselnde Drehwegung besagter Flügel in entgegengesetzten Winkelrichtungen sind.

26. Eine Batterie für die Zucht von Hühnern laut Anspruch 22, dadurch gekennzeichnet, daß das besagte Traggestell eine Anzahl von längs voneinander entfernten Querträgern (116) sowie Mittel (137) für die drehbare Befestigung der besagten Tragwellen (128, 130) der Flügel an den besagten Querträgern (116) aufweist.

27. Eine Batterie für die Zucht von Hühnern laut einem beliebigen der bereits erwähnten Ansprüche, dadurch gekennzeichnet, daß sie Mittel (70, 72) für die Verteilung der Exkremente in einer quertaufenden Richtung umfaßt.

28. Eine Batterie für die Zucht von Hühnern laut Anspruch 27, dadurch gekennzeichnet, daß besagte Mittel (70) für die Verteilung der Exkremente in einer querlaufenden Richtung mit dem besagten Band (22) des Lagerungs- und Trocknungsbereichs (20) verbunden sind.

29. Eine Batterie für die Zucht von Hühnern laut Anspruch 27, dadurch gekennzeichnet, daß die besagten Mittel (72) für die Verteilung der Exkremente in quertaufender Richtung mit jedem Band (16) für frische Exkremente (P) verbunden sind.

30. Eine Batterie für die Zucht von Hühnern laut einem beliebigen der bereits erwähnten Ansprüche von 27 bis 29, dadurch gekennzeichnet, daß die besagten Mittel (70, 72) für die Verteilung der Exkremente entlang der Breite des Bands Förderschnecken (74) umfassen, die von entsprechenden Drehantriebsmitteln (76, 78) zum Drehen gebracht werden.

31. Eine Batterie für die Zucht von Hühnern laut Anspruch 30, dadurch gekennzeichnet, daß die besagten Förderschnecken (74) einen ersten und zweiten Schraubenantrieb (84, 86) für die Beförderung der Exkremente umfassen, von denen jeder sich von der Mitte der Förderschnecke (74) zum jeweiligen seitlichen Rand der Förderschnecke (74) erstreckt, wobei besagte Schraubenantriebe (84, 86) spiralförmig in entgegengesetzte Richtungen gedreht werden, so daß die Exkremente (P), dem Antrieb der besagten Förderschnecke (74) zum Drehen folgend, von der Mitte in Richtung der äußeren Ränder des Bands verteilt werden.

## Revendications

1. Une batterie de cages pour volaille ou autre animaux placée à l'intérieur d'une pièce d'un édifice pour l'élevage et se composant d'un châssis de support (12; 112, 114, 116), d'une pluralité de cages (14; 118) pour contenir la volaille bien ordonnée dans des rangées de cages (14, 118) et d'une pluralité de ces rangées de cages (14, 118) mises en place en hauteur, substantiellement l'une au-dessus de l'autre, alors que sous chaque rangée de cages (14, 118) se trouve un tapis roulant correspondant (16, 120) pour le dépôt et l'enlèvement périodique des fientes fraîches (P) produites par la volaille; en outre, cette batterie comprend au moins une section (20; 121) pour emmagasiner et sécher les fientes (P), supportée par le châssis (12; 112, 114, 116) de la batterie dans une position telle qu'elle ne reçoit en aucune manière aucun dépôt direct de fientes fraîches (P) produites par la volaille; caractérisée par le fait que cette section (20, 121) pour emmagasiner et sécher les fientes (P) comprend un plateau (22, 122) pour supporter les fientes (P) placé verticalement aligné avec les rangées de cages (14, 118) et leurs tapis roulants correspondants (16, 120), et des moyens de ventilation par pales, formés de pales oscillantes (30; 124, 126), situés au-dessus de ce plateau de support (22; 122) pour ventiler de l'air sur les fientes qui y sont déposées; et dans le sens que cette section (20, 121) pour l'emmagasinage et le séchage des fientes (P) présente une configuration ouverte pour permettre à ces moyens de ventilation par pales (30; 124, 126) de fournir un échange du flux d'air entre la section (20, 121) pour l'emmagasinage et le séchage, et la pièce dans laquelle est placée la batterie (10).

2. Une batterie de cages pour volaille conformément à la revendication 1, caractérisée par le fait que cette section (20, 121) pour l'emmagasinage et le séchage comprend un élément de couverture (16, 120) et qu'elle est ouverte sur la partie latérale pour un échange du flux d'air entre les sections (20, 121) pour l'emmagasinage et le séchage, et la pièce dans laquelle est placée la batterie (10).

3. Une batterie de cages pour volaille conformément à la revendication 2, caractérisée par le fait que l'élément de couverture est constitué par le tapis roulant (16, 120) pour les fientes fraîches (P) de la rangée supérieure de cages (14, 118).

4. Une batterie de cages pour volaille conformément à toutes les revendications précédentes, caractérisée par le fait que ce plateau (22, 122) pour le support et l'emmagasinage des fientes s'allonge longitudinalement au-delà des tapis roulants de support des fientes fraîches (16; 120) placés de la manière indiquée ci-dessus afin de recevoir les fientes d'un tapis roulant de support des fientes fraîches situé en amont sur un parcours de transport des fientes.

5. Une batterie de cages pour volaille conformément à toutes les revendications précédentes, caractérisée par le fait que ce plateau (22, 122) pour transporter et emmagasiner des fientes est formé par un tapis roulant, celui-ci étant doté de moyens (M) qui le font tourner périodiquement pour charger les fientes (P) et les distribuer sur toute la longueur du tapis (22, 122) et pour décharger les fientes sèches de ce tapis d'emmagasinage (22, 122).

6. Une batterie de cages pour volaille conformément à la revendication 5, caractérisée par le fait que cette section (20, 121) pour l'emmagasinage et le séchage est latéralement ouverte à partir du tapis roulant (22, 122) pour le support des fientes (P) de la section pour l'emmagasinage et le séchage au tapis roulant (16; 20) pour les fientes fraîches (P) de la rangée supérieure de cages (14, 118).

7. Une batterie de cages pour volaille conformément à toutes les revendications précédentes, caractérisée par le fait que la pale des moyens de ventilation comprend une pluralité de pales (30) alignées longitudinalement tout le long de la section pour emmagasiner les fientes à sécher, chaque pale (30) étant fixée au châssis de support (12) d'une manière rotative, et des moyens (42, 50) pour actionner ces pales (30) dans un mouvement alternatif en arrière et en avant, à même d'envoyer de l'air sur les fientes.

8. Une batterie de cages pour volaille conformément à toutes les revendications précédentes de 1 à 6, caractérisée par le fait que ces moyens de ventilation par pale se composent d'une première et d'une seconde pluralité de panneaux transversaux (38, 38), où les panneaux (38) de chaque pluralité de panneaux transversaux sont longitudinalement alignés et distancés les uns par rapport aux autres, dans le sens que les panneaux (28) de chaque pluralité de panneaux sont fixés au châssis de support (12) d'une manière rotative, et dans le sens que des moyens (42, 50) actionnent ces panneaux (38) de chaque pluralité de panneaux dans un mouvement alternatif en amère et en avant, pour envoyer l'air sur les fientes.

9. Une batterie de cages pour volaille conformément à la revendication 8, caractérisée par le fait que chacun de ces panneaux transversaux (38) s'allonge avec un de ses bords latéraux à proximité du bord du plateau de support (22) pour un échange du flux d'air entre la section (20) pour l'emmagasinage et le séchage, et la pièce dans laquelle est placée la batterie (10).

10. Une batterie de cages pour volaille conformément à toutes les revendications précédentes 8 et 9, caractérisée par le fait que chaque panneau (38) d'une première pluralité de panneaux transversaux est coplanaire et adjacent à un panneau correspondant (38) de la seconde pluralité de panneaux transversaux, ces panneaux correspondants (38, 38) de la première et de la seconde pluralité de panneau sont séparés l'un par rapport à l'autre par une étroite ouverture centrale (40).

11. Une batterie de cages pour volaille conformément à la revendication 10, caractérisée par le fait que chaque panneau (38) de la première pluralité de panneaux transversaux et le panneau coplanaire et adjacent correspondant (38) de la seconde pluralité de panneaux transversaux sont assemblés l'un à l'autre pour définir une grande pale unique (30).

12. Une batterie de cages pour volaille conformément à la revendication 11, caractérisée par le fait que pour déplacer l'air, chaque grande pale (30) possède une largeur totale au moins égale à la largeur du plateau (22) pour le support des fientes de la section d'emmagasinage et de séchage (20).

13. Une batterie de cages pour volaille conformément à la revendication 11, caractérisée par le fait que les moyens d'actionnement des pales de ventilation (30) comprennent une longue tige longitudinale (42) et des moyens (44, 46, 48) de fixation de ces pales (30) ou des panneaux (38) à cette tige (42), ainsi que des moyens (52) de mouvement alternatif en avant et en arrière de cette tige (42) pour actionner les pales (30).

14. Une batterie de cages pour volaille conformément à la revendication 13, caractérisée par le fait que la tige longitudinale (42) se prolonge dans l'ouverture centrale (40) de séparation de ces panneaux (38, 38).

15. Une batterie de cages pour volaille conformément à la revendication 13, caractérisée par le fait qu'elle comprend des moyens de poussée à ressort (68) qui interviennent sur la tige longitudinale (42).

16. Une batterie de cages pour volaille conformément à la revendication 11, caractérisée par le fait que le premier et le second panneau de mouvement de l'air (38, 38) s'engagent avec une de leurs extrémités supérieures dans une fente transversale de la barre (34) assemblée de manière tournante au châssis au moyen de chevilles (36).

17. Une batterie de cages pour volaille conformément à toutes les revendications de 1 à 6, caractérisée par le fait que ces moyens à pale pour la ventilation de ces fientes comprennent au moins une première pale (124 ou 126) pour la ventilation des fientes (P) disposée longitudinalement parallèle au plateau (122) pour le support des fientes (P) et des moyens (128, 130, 158) pour actionner alternativement ces pales de ventilation afin d'envoyer l'air sur ces fientes (P).

18. Une batterie de cages pour volaille conformément à toutes les revendications de 1 à 6, caractérisée par le fait que ces moyens à pale pour la ventilation de ces fientes comprennent au moins une première et une seconde pale (124, 126) pour la ventilation des fientes (P) disposées longitudinalement parallèles au plateau (122) pour le support des fientes (P) et des moyens (128, 130, 158) pour actionner alternativement ces pales de ventilation afin d'envoyer l'air sur ces fientes (P) de sorte que ces pales de ventilation (124, 126) sont actionnées de manière synchrone dans des directions opposées.

19. Une batterie de cages pour volaille conformément aux revendications 17 ou 18, caractérisée par le fait que ces pales de ventilation (124, 126) se prolongent en largeur sur toute la longueur du plateau de support (122) ou sur une portion longitudinale de celui-ci.

20. Une batterie de cages pour volaille conformément à la revendication 18, caractérisée par le fait que la première et la seconde pale de ventilation (124, 126) sont disposées transversalement distancées l'une de l'autre.

21. Une batterie de cages pour volaille conformément aux revendications 17 et 18, caractérisée par le fait que chacune de ces pales de ventilation (124, 126) est en forme de pale courte pour le mouvement de l'air.

22. Une batterie de cages pour volaille conformément aux revendications 17 et 18, caractérisée par le fait que la première et la seconde pale de ventilation (124, 126) sont supportées respectivement par le premier et le second arbre de support (128, 130) fixés en rotation libre à la structure de support à plateaux, à angle droit avec les axes (L) du plateau (122) de support des fientes de la volaille (P).

23. Une batterie de cages pour volaille conformément aux revendications 17 et 18, caractérisée par le fait que chaque pale de ventilation (124, 126) consiste dans une pluralité de panneaux (132) alignés longitudinalement et coplanairement l'un par rapport à l'autre.

24. Une batterie de cages pour volaille conformément à chacune des revendications précédentes, 22 ou 23, caractérisée par le fait que chaque arbre de support (128, 130) présente un profil extérieur (134) ayant une forme polygonale et par le fait qu'il monte des moyens de fixation de chaque panneau à son arbre de support correspondant; ces moyens de fixation comprennent une portion d'accouplement formée par un élément tubulaire creux (136) ayant une configuration intérieure de forme polygonale à même de s'adapter au profil extérieur (134) de l'arbre de support correspondant et à même d'être inséré sur l'arbre correspondant et de rester fermement ancré à celui-ci.

25. Une batterie de cages pour volaille conformément à la revendication 18, caractérisée par le fait que ces moyens d'actionnement sont des moyens pour actionner ces pales de manière rotative et alternative dans des directions angulaires opposées.

26. Une batterie de cages pour volaille conformément à la revendication 22, caractérisée par le fait que le châssis de support possède une pluralité de barres transversales longitudinalement distancées (116) et des moyens (137) de fixation des arbres rotatifs de support (128, 130) des pales de ces barres transversales (116).

27. Une batterie de cages pour volaille conformément à toutes les revendications précédentes, caractérisée par le fait qu'elle comprend des moyens (70, 72) de distribution des fientes en direction transversale.

28. Une batterie de cages pour volaille conformément à la revendication 27, caractérisée par le fait que ces moyens (70) de distribution des fientes en direction transversale sont associés au tapis (22) de la section d'emmagasinage et de séchage (20).

29. Une batterie de cages pour volaille conformément à la revendication 27, caractérisée par le fait que ces moyens (72) de distribution des fientes en direction transversale sont associés à chaque tapis (16) pour les fientes fraîches (P).

30. Une batterie de cages pour volaille conformément aux revendications précédentes de 27 à 29, caractérisée par le fait que ces moyens (70, 72) de distribution des fientes sur la largeur du tapis consistent en des vis d'Archimède (74) dont la rotation est réalisée par des moyens adéquats (76, 78) d'actionnement de la rotation adéquats.

31. Une batterie de cages pour volaille conformément à la revendication 30, caractérisée par le fait que ces moyens vis d'Archimède (74) se composent d'une première et d'une seconde hélice (84, 86) pour transporter les fientes, chacune desquelles s'étend du milieu de la vis d'Archimède (74) vers le bord latéral correspondant de la vis d'Archimède (74), ces hélices (84, 86) étant enroulées en spirales dans des directions opposées de sorte que, la vis d'Archimède (74) continuant de tourner, les fientes (P) se distribuent du centre vers les bords extérieurs du tapis.
